# EUROPÄISCHE PATENTANMELDUNG

(11) **EP 1 710 415 A1**
(43) Veröffentlichungstag der Anmeldung: **11.10.2006**
(21) Anmeldenummer: 05405279.0
(22) Anmeldetag: 04.04.2005
(51) Int. Cl.: F02B 37/013, F02B 37/22, F02B 37/24

(54) **Mehrstufige Aufladung**

(71) Anmelder: ABB Turbo Systems AG, 5400 Baden (CH)
(72) Erfinder: Codann, Ennio, 5212 Hausen bei Brugg (CH)
(74) Vertreter: ABB Patent Attorneys

(57) **Zusammenfassung**

Die zweistufige Aufladevorrichtung zum Aufladen einer Brennkraftmaschine (1) weist einen Niederdruck-Abgasturbolader (2) mit einer Turbine (22) mit einem Doppel-Abgaseintritt (24, 25) auf, wobei dem einen Abgaseintritt Abgas aus dem Abgasaustritt der Turbine (32) des Hochdruck-Turboladers (3) zugeführt wird, während dem anderen Abgaseintritt über ein Drosselelement (4) Abgas aus der Zuleitung zum Abgaseintritt der Turbine des Hochdruck-Turboladers zugeführt wird.

Das thermodynamische Potential der zweistufigen, geregelten Aufladevorrichtung ist besser als bei einer herkömmlichen zweistufigen Aufladevorrichtung mit einem Abgas-Wastegate.

## Beschreibung

### Technisches Gebiet

Die Erfindung bezieht sich auf das Gebiet der aufgeladenen Brennkraftmaschinen. Sie betrifft eine mehrstufige Aufladevorrichtung einer Brennkraftmaschine.

### Stand der Technik

Die steigenden Anforderungen bezüglich einer hohen Leistungsdichte bei geringen Emissionen für moderne, aufgeladene Brennkraftmaschinen (Verbrennungsmotoren) führen zu immer höheren Anforderungen an Druckverhältnis und Wirkungsgrad für die der Brennkraftmaschine vorgeschaltete Aufladevorrichtung.

Abhilfe kann da die Aufladung mit zwei oder mehreren in Serie angeordneten Abgasturboladern, die sogenannte zwei- oder mehrstufige Aufladung, leisten. Bekanntermassen werden bei der zweistufigen Aufladung ein Niederdruck-Abgasturbolader und ein Hochdruck-Abgasturbolader in Serie angeordnet, wobei auf der Verdichterseite der Luftaustritt des Verdichters des Niederdruck-Abgasturboladers mit dem Lufteintritt des Verdichters des Hochdruck-Abgasturboladers und auf der Turbinenseite der Abgasaustritt der Turbine des Hochdruck-Abgasturboladers mit dem Abgaseintritt der Turbine des Niederdruck-Abgasturboladers verbunden wird.

Die zweistufige Aufladung erlaubt nicht nur höhere Druckverhältnisse mit besseren Wirkungsgraden zu erreichen, sondern bietet in einer weiterentwickelten Ausführungsform auch bessere Regelungsmöglichkeiten. Für Verbrennungsmotoren etwa, die in einem breiten Drehzahl- und Lastbereich arbeiten müssen, kann die Aufladung mit hohem Druckverhältnis und Wirkungsgrad und fester Geometrie zu Luftmangelproblemen im Teillastbereich führen, weil der Ladedruck mit Motorlast und - Drehzahl zu stark abnimmt. Diese werden mit der geregelten, zweistufige Aufladung, wie sie etwa aus EP 1 394 380 oder EP 1 136 676 bekannt ist, weitgehend behoben.

Die wesentliche Erweiterung der geregelten, zweistufigen Aufladung gegenüber der ungeregelten, zweistufigen Aufladung, ist ein Drosselelement (Ventil), welches in einem Zuführkanal angeordnet ist, welcher einen Teil des Abgasstromes der Brennkraftmaschine vor dem Abgaseintritt der Turbine des Hochdruck-Abgasturboladers abzweigt und der Zuleitung zur Turbine des Niederdruck-Abgasturboladers vor dem Abgaseintritt der Turbine des Niederdruck-Abgasturboladers zuführt.

Die Referenzkonfiguration der geregelten, zweistufigen Aufladung ergibt sich mit geschlossenem Drosselelement: Der gesamte Abgasstrom durchfliesst hintereinander die in Serie angeordneten Turbinen, welche für diesen Abgasmassenstrom die maximale Leistung für den Antrieb der Verdichter produzieren.

Nimmt der Abgasmassenstrom zu, kann, ausgehend von dieser Referenzkonfiguration, durch Öffnen des Drosselelements die spezifische Leistung der Turbinen in einem weiten Bereich konstant gehalten werden.

Das Drosselelement funktioniert dabei in etwa wie ein Abgas-Wastegate. Der Unterschied besteht einzig darin, dass bei einem Abgas-Wastegate ein Teilmassenstrom vom Abgassystem abgezweigt und in die Umgebung abgelassen wird, so dass bei steigendem Abgasmassenstrom der Systemwirkungsgrad stetig abnimmt. Die abgelassene Abgasmenge erhöht zwar die Durchlässigkeit des Systems, gibt aber keinerlei Leistung zurück.

Mit dem Drosselelement in der geregelten, zweistufigen Aufladung wird durch das teilweise Umgehen der Turbine des Hochdruck-Abgasturboladers auch teilweise die Energie des Abgases gedrosselt. Allerdings wird das umgeleitete Abgas vor der Turbine des Niederdruck-Abgasturboladers wieder dem Abgasstrom zugeführt. Der Wirkungsgradverlust fällt deshalb viel geringer aus. Werden grosse Mengen Abgas über das Drosselelement geführt, erhöht sich der Druck vor der Turbine des Niederdruck-Abgasturboladers derart, dass die Drosselwirkung verschwindet und der Systemwirkungsgrad sogar wieder ansteigt.

Ist das Drosselelement voll geöffnet, fällt der Drosseleffekt praktisch weg und es arbeitet nur noch die Niederdruckturbine. Der Vorteil der Zweistufigkeit geht somit verloren. Ein solches System eignet sich dennoch für Fahrzeugmotoren, welche einen moderaten, konstanten Ladedruck in einem sehr breiten Motordrehzahlbereich benötigen.

Für Motoren hingegen, welche ein markant höheres Druckniveau brauchen, dafür aber einen engeren Regelbereich benötigen, kann das Drosselelement auf keinen Fall sehr weit geöffnet werden. Zudem ist auch die moderate Wirkungsgradreduktion höchst unerwünscht.

### Kurze Darstellung der Erfindung

Die Aufgabe der Erfindung besteht darin, eine zwei oder mehrstufige Aufladevorrichtung mit einem verbesserten Wirkungsgrad bei grossen Abgasströmen zu schaffen.

Die Aufgabe wird mittels einer Aufladevorrichtung mit einer Niederdruck-Turbine mit einem Doppel-Abgaseintritt gelöst, wobei dem einen Abgaseintritt Abgas aus dem Abgasaustritt der Turbine des Hochdruck-Turboladers zugeführt wird, während dem anderen Abgaseintritt über ein Drosselelement Abgas aus der Zuleitung zum Abgaseintritt der Turbine des Hochdruck-Turboladers zugeführt wird.

Die Turbine des Niederdruck-Abgasturboladers ist vorzugsweise mit einer konzentrischen Trennung des Leitelements (Düsenring) bei Axialturbinen, bzw. mit zwei parallel verlaufenden Spiralgehäusen bei Radialturbinen ausgestattet. Dies erlaubt den Betrieb mit unterschiedlichen Drücken mit optimalem Wirkungsgrad.

Die Turbine des Niederdruck-Abgasturboladers weist vorteilhafterweise zwei ungleiche Gaseintrittsflansche auf, wobei der grössere Eintritt das Abgas aus der Serienschaltung vom Gasaustritt der Turbine des Hochdruck-Abgasturboladers zugeführt bekommt, während der kleinere Eintritt das Abgas aus der Zuleitung mit dem Drosselelement zugeführt bekommt.

Aufgrund dieser Anordnung kann der Hochdruck-Abgasturbolader kleiner ausgebildet sein, da seine Turbine nicht für die volle Gasmenge dimensioniert werden muss. Dadurch ergeben sich Kontervorteile gegenüber der herkömmlichen, zweistufigen Aufladung.

Das thermodynamische Potential der erfindungsgemässen zweistufigen, geregelten Aufladevorrichtung ist besser als bei einer herkömmlichen zweistufigen Aufladevorrichtung mit einem Abgas-Wastgate.

Weitere Vorteile ergeben sich aus den abhängigen Patentansprüchen.

### Kurze Beschreibung der Zeichnungen

Anschliessend wird die erfindungsgemässe Aufladevorrichtung in mehreren Ausführungsformen anhand von Figuren detaillierter erläutert. Dabei zeigt
- Fig. 1: eine schematische Darstellung der erfindungsgemässen, zweistufigen Aufladevorrichtung mit einem Niederdruck-Abgasturbolader mit einer Turbine mit Doppel-Abgaseintritt,
- Fig. 2: einen Schnitt durch eine erste Ausführungsform der Turbine des Niederdruck-Abgasturboladers der zweistufigen Aufladevorrichtung nach Fig. 1,
- Fig. 3: einen Schnitt durch eine zweite Ausführungsform der Turbine des Niederdruck-Abgasturboladers der zweistufigen Aufladevorrichtung nach Fig. 1,
- Fig. 4: einen Schnitt durch eine dritte Ausführungsform der Turbine des Niederdruck-Abgasturboladers der zweistufigen Aufladevorrichtung nach Fig. 1, und
- Fig. 5: ein Diagramm mit dem Wirkungsgrad der zweistufigen Aufladevorrichtung nach Fig. 1 in Abhängigkeit des Abgas-Massenstromes.

### Weg zur Ausführung der Erfindung

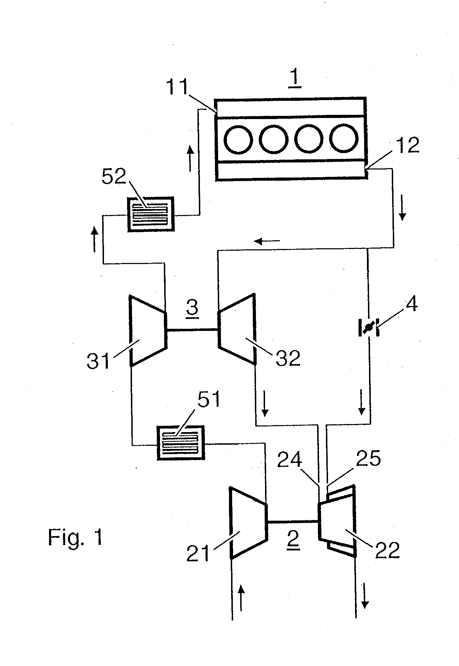

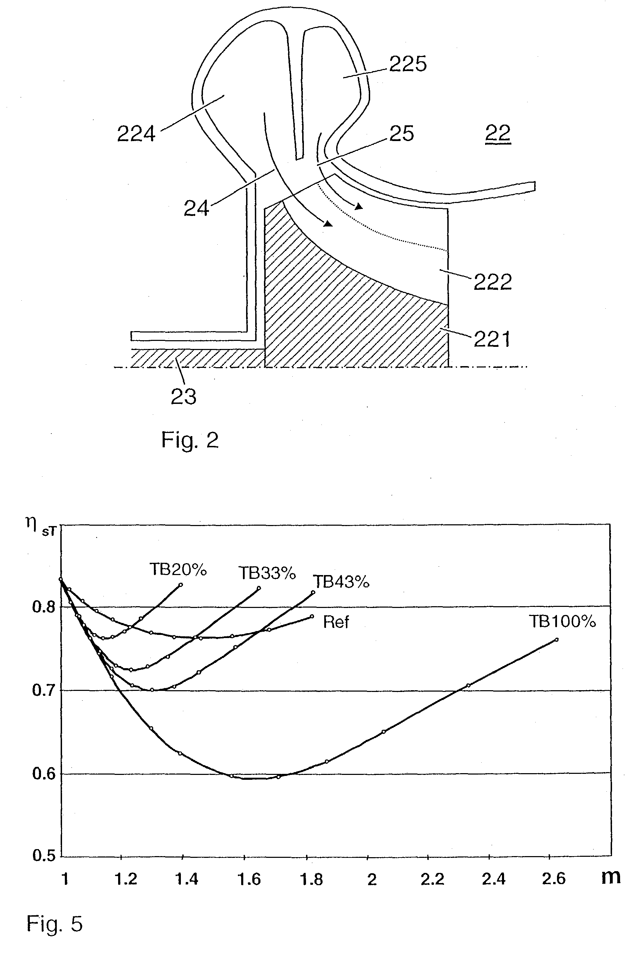

Fig. 1 zeigt die erfindungsgemässe Aufladevorrichtung in einer schematischen Übersicht:
Eine Brennkraftmaschine 1, beispielsweise der Verbrennungsmotor eines Kraftfahrzeugs, bezieht über die Luftzufuhr 11 Frischluft zur Verbrennung in den Brennkammern. Die resultierenden Abgase werden über den Abgasaustritt 12 in einen Abgasstrang abgegeben. Im Abgasstrang sind mehrere, im dargestellten Fall zwei, Turbinen von Abgasturboladern angeordnet. Die Turbinen 32 und 22 sind hintereinander in Serie angeordnet, so dass das Abgas aus der Brennkraftmaschine zuerst mit noch hohem Druck über die Turbine 32 des Hochdruck-Abgasturboladers 3 und anschliessend mit niedrigerem Druck über die Turbine 22 des Niederdruck-Abgasturboladers 2 geführt wird. Die beiden Turbinen treiben je einen Verdichter an, wobei der Verdichter 21 des Niederdruck-Abgasturboladers 2 über den Lufteintritt unkomprimierte Frischluft ansaugt, diese verdichtet und über den Luftaustritt und gegebenenfalls einen Zwischenkühler 51 dem Lufteintritt des Verdichters 31 des Hochdruck-Abgasturboladers 3 zuführt, ehe die hochverdichtete Luft gegebenenfalls über einen Ladeluftkühler 52 der Brennkraftmaschine zugeführt wird. Die Turbine 22 des Niederdruck-Abgasturboladers 2 umfasst erfindungsgemäss einen zweiten Abgaseintritt welcher direkt oder, wie dargestellt, über ein Drosselelement (Ventil) 4 mit dem Abgasstrang stromauf des Abgaseintritts der Turbine 32 des Hochdruck-Abgasturboladers 3 verbunden ist. Wie aus den Fig. 2 bis 4 erkennbar ist, ist die Turbine 22 des Niederdruck-Abgasturboladers aus zwei eigentlichen ,Teilturbinen' gebildet, wobei sich die beiden ,Teilturbinen' sowohl Turbinenrad 221 als auch Leitschaufeln 222 teilen.
Fig. 2 zeigt eine erste Ausführungsform der Turbine des Niederdruck-Abgasturboladers als sogenannten Mixed-Flow Turbine. Die Turbine umfasst ein mit einer Welle 23 verbundenes Turbinenrad mit Nabe 221 und Laufschaufeln 222. Die Abgasströmung wird aus radialer Richtung mit einer axialen Komponente auf die schräg verlaufende Eintrittskante der Laufschaufeln 222 geführt. Analog gelten die folgenden Ausführungen auch für eine Radialturbine, mit streng radial angeströmten Laufschaufeln. Der Strömungsaustritt erfolgt sowohl bei Mixed-Flow wie auch bei Radialturbinen in axialer Richtung. Die beiden Abgaseintritte 224 und 225 formen zwei getrennte, rundum verlaufende Spiral- oder Schneckengehäuse (Zwillingsspirale) mit jeweils einer eigenen, rundum zu den Eintrittskanten der Laufschaufeln hin gerichteten Öffnung. Je nach Betriebsmodus ergeben sich zwei unterschiedlich starke Strömungen 24 und 25, wobei die beiden Strömungen unabhängig voneinander auf die Laufschaufeln auftreten und entsprechend die Turbine antreiben. Die getrennten Strömungsverläufe sind mittels gepunkteter Linie angedeutet. Vor den Laufschaufeln 222 können Leitschaufeln angeordnet sein, welche einen geteilten oder ungeteilten Düsenring bilden (nicht dargestellt).

Diese Ausführung kann in einer symmetrischen Ausführung bei kleinen Turboladern bei Stossaufladung verwendet werden. Für die vorliegende Aufladungsvorrichtung sind jedoch asymmetrische Gaseintritte vorteilhaft. Die Teilspirale, welche die Strömung 25 vom Drosselelement auf die Turbine führt, sollte eine äquivalente Fläche (bzw. einen Wert A/R) aufweisen, welche zwischen 20% und 50% des Wertes der anderen Teilspirale liegt. Zudem muss diese Teilspirale die Strömung im Bereich der Schaufelnspitzen führen, weil damit die Geschwindigkeitsverhältnisse der jeweiligen Teüströmungen in Vollastbereich des Motors günstiger sind. Bei weit geöffnetem Drosselelement ist der Abgasdruck höher als der Austrittsdruck aus der Turbine des Hochdruck-Abgasturboladers. Dementsprechend ist auch die isentrope Strömungsgeschwindigkeit höher und diese Strömung sollte vorteilhafterweise in den Teil des Laufrades geführt werden, in welchem die Umfangsgeschwindigkeit am höchsten ist.

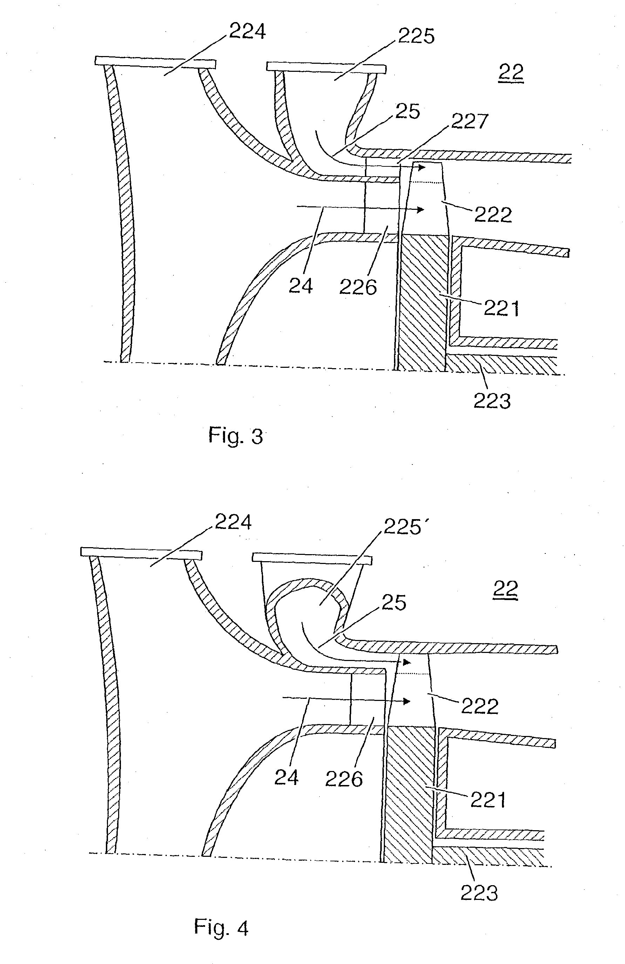

Fig. 3 zeigt eine zweite Ausführungsform der Turbine des Niederdruck-Abgasturboladers als doppelte Axialturbine. Die beiden Abgaseintritte 224 und 225 formen wiederum zwei getrennt verlaufende Strömungskanäle mit jeweils einer zu den Eintrittskanten der Laufschaufeln hin gerichteten Öffnung. In der Ausführungsform der Axialturbine sind die beiden Strömungskanäle koaxial einander umgebend angeordnet. Dabei ist der Strömungskanal der Strömung 25 vom Drosselelement, welche im ungedrosselten Betrieb mit hohem Druck auf die Turbinenlaufschaufeln geführt wird, aus den oben genannten Gründen der Strömungs- bzw. Laufradgeschwindigkeit radial ausserhalb. In jedem der beiden Strömungskanäle ist ein Leitelement (Düsenring) mit Leitschaufeln 226 bzw. 227 angeordnet. Alternativ kann auch nur einer der Strömungskanäle mit einem solchen Leitelement ausgestattet sein, wie dies in Fig. 4 angedeutet ist. Die dritte Ausführungsform gemäss Fig. 4 zeigt wiederum eine Axialturbine, allerdings mit einer die Hauptströmung von der Turbine des Hochdruck-Abgasturboladers umgebenden Spirale für die Strömung vom Drosselelement.

Für die erfindungsgemässe, zweistufige Aufladevorrichtung erbeben sich drei charakteristischen Betriebsmodi. Zur Vereinfachung wird dabei angenommen, die Turbine 22 des Niederdruck-Abgasturboladers 2 verhalte sich mit den zwei Gaseintritten 224 und 225 und den dadurch gebildeten, getrennt auf die Laufschaufeln führenden Strömungskanälen wie zwei getrennte Turbinen (ND1 und ND2):
a) Das Drosselelement ist voll geschlossen.
   In diesem Fall wird die Turbine ND2 nicht mit Abgas beaufschlagt und der gesamte Abgasmassenstrom fliesst über die zwei Turbinen 32 und 22 der in Serie angeordneten Abgasturboladern 3 und 2. Die Aufladevorrichtung verhält sich gleich wie eine konventionelle, mehrstufige Aufladevorrichtung mit einer Turbine gleicher Grösse wie ND1.
b) Das Drosselelement ist gerade so weit geöffnet, dass der Abgasdruck nach dem Drosselelement gleich gross ist, wie der Abgasdruck am Gasaustritt der Turbine des Hochdruck-Abgasturboladers.
   In diesem Fall verhält sich die Aufladevorrichtung wie eine konventionelle, mehrstufige Aufladevorrichtung mit einer herkömmlichen Turbine der Grösse ND1+ND2 und der gleichen Drosseielementstellung.
c) Das Drosselelement ist maximal geöffnet.
   In diesem Fall arbeiten die Turbine des Hochdruck-Abgasturboladers und die Teilturbine ,ND1' weiterhin in Serie und die ,Teilturbine' ND2 verarbeitet zusätzlich einen Teilmassenstrom welcher mit maximalem Druck anliegt.

Unter dieser vereinfachten Betrachtung fällt sofort auf, dass in den beiden extremen Konfigurationen, d.h. mit voll geschlossenem, bzw. voll geöffnetem Drosselelement, kein Energieverlust durch Drosselung vorhanden ist.

Zusammenfassend kann festgehalten werden, dass die Turbine des Niederdruck-Abgasturboladers der erfindungsgemässen Aufladevorrichtung unter der folgenden Beaufschlagung arbeitet:
- Im Modus a) unter Teilbeaufschlagung.
- Zwischen Modus a) und Modus b) unter ungleicher Beaufschlagung, mit höherem Druck in der Teilturbine ND1.
- Im Modus b) unter Vollbeaufschlagung.
   Zwischen Modus b) und Modus c) und im Modus c) unter ungleicher Beaufschlagung, mit höherem Druck in der Teilturbine ND2.

Im Diagramm der Fig. 5 sind Wirkungsgradverläufe über dem Massenstrom für verschiedene Aufladevorrichtungen dargestellt. Die den Kurven zugrundeliegenden Berechnungen wurden mit vereinfachten Turbinenstufen (Ersatzdüsen mit einen konstanten isentropen Wirkungsgrad von 0.82) durchgeführt.

Die gestrichelte Referenzkurve (Ref) bezieht sich auf eine Referenzaufladevorrichtung mit einer herkömmlichen Turbine des Niederdruck-Abgasturboladers. Die Turbine des Hochdruck-Abgasturboladers hat eine Ersatzfläche 50, die herkömmlich Turbine des Niederdruck-Abgasturboladers hat eine Ersatzfläche 100 und der Bypass über das Drosselelement hat eine variable Fläche von 0 bis 100. Auf der unabhängigen Achse des Diagramms ist der bezogene Massenstrom aufgetragen, wobei der Wert 1 für die Referenzkonfiguration bei geschlossenen Drosselelement gilt. Das gesamte Expansionsverhältnis beider Turbinenstufen ist konstant auf 4 gehalten. Der Massenstrom kann in der Referenzkonfiguration bis auf einen Wert etwas über 1.8 erhöht werden, während der entsprechende Wirkungsgrad in einem breiten Massestrom-Bereich von 0.82 auf das Niveau 0.76 sinkt.

Die weiteren Kurven zeigen Werte der erfindungsgemässen Aufladevorrichtung. Die Turbine des Hochdruck-Abgasturboladers, die erste ,Teilturbine' ND1 des Niederdruck-Abgasturboladers und das Drosselelement sind unverändert gegenüber der Referenzvorrichtung. Der umgeleitete Massenstrom wird auf die zweite ,Teilturbine' ND2 des Niederdruck-Abgasturboladers geführt, welche jeweils eine Fläche von 20, 33, 43, 100 besitzt. Aus dem Kurvenverlauf ist erkennbar, dass der Regelbereich fast beliebig durch die Wahl der Zusatzfläche der zweiten ,Teilturbine' eingestellt werden kann. Der Wirkungsgrad der erfindungsgemässen Aufladevorrichtung fällt zwar bei grossen Regelbereichen im Minimum tiefer ab, ist dafür in der voll geöffneter Stellung des Drosselelements, d.h. bei maximalem Massenstrom, deutlich höher als im Referenzfall.

Um das Potential der erfindungsgemässen Vorrichtung voll nutzen zu können, werden beide Teilströme 24 und 25 rundum über den vollen Umfang auf die Laufschaufeln der Turbine geleitet. Damit kann verhindert werden, dass bei unterschiedlicher Beaufschlagung verschiedener Sektoren des Turbinenrades Strömungsverluste entstehen.

Anstelle der zweistufigen Anordnung mit eine Hochdruck-Abgasturbolader und einem Niederdruck-Abgasturbolader sind auch Aufladevorrichtungen mit mehreren Stufen denkbar. Dabei können die entsprechenden Niederdruck-Abgasturbolader mit den beschriebenen Doppel-Abgaseintritten, oder, bei Vorrichtungen mit drei oder mehr Stufen, mit drei- oder mehrfachen Abgaseintritten ausgestattet sein. Dabei ist wiederum zu beachten, dass die Beaufschlagung der Laufschaufeln entlang dem vollen Umfang der Turbine erfolgt.

### Bezugszeichenliste

- 1: Brennkraftmaschine
- 11: Luftzufuhr
- 12: Abgasaustritt
- 2: Niederdruck-Turbolader
- 21: Niederdruck-Verdichter
- 22: Niederdruck-Turbine
- 221: Turbinenrad
- 222: Laufschaufel
- 224: Gaseintritt von Serienschaltung
- 225: Gaseintritt von Drossel-Ventil
- 226: Leitschaufel von Serienschaltung
- 227: Leitschaufel von Drossel-Ventil
- 23: Welle
- 24: Abgasströmung von Serienschaltung
- 25: Abgasströmung von Drossel-Ventil
- 3: Hochdruck-Turbolader
- 31: Hochdruck-Verdichter
- 32: Hochdruck-Turbine
- 4: Drossel-Ventil
- 51: Zwischenkühler
- 52: Ladeluftkühler

## Patentansprüche

1. Mehrstufige Aufladevorrichtung für eine Brennkraftmaschine (1), umfassend mindestens zwei in Serie angeordnete Abgasturbolader (2, 3) mit jeweils einer Abgasturbine (22, 32) und jeweils einem Verdichter (21, 31), wobei
die Abgasturbinen stromab des Abgasaustritts (12) der Brennkraftmaschine (1) angeordnet sind und mit Abgas der Brennkraftmaschine beaufschlagt werden, die Verdichter jeweils einen Lufteintritt und einen Luftaustritt und die Abgasturbinen jeweils einen Gaseintritt und einen Gasaustritt umfassen,
der Luftaustritt des Verdichters (21) eines ersten Abgasturboladers (2) mit dem Lufteintritt des Verdichters (31) eines zweiten Abgasturboladers (3) verbunden ist, und
der Gasaustritt der Turbine (32) des zweiten Abgasturboladers (3) mit dem Gaseintritt der Turbine (22) des ersten Abgasturboladers (2) verbunden ist,
**dadurch gekennzeichnet, dass**
die Turbine (22) des ersten Abgasturboladers (2) zusätzlich zu dem mit dem Gasaustritt der Turbine (32) des zweiten Abgasturboladers (3) verbundenen, ersten Gaseintritt (224) einen zweiten Gaseintritt (225) umfasst, und dass
die beiden Gaseintritte (224, 225) voneinander getrennte Strömungskanäle bilden, über welche sich die Abgasströmungen (24, 25) durch die beiden Gaseintritte voneinander getrennt auf die Laufschaufein (222) der Turbine des ersten Abgasturboladers führen lassen.

2. Aufladevorrichtung nach Anspruch 1, **dadurch gekennzeichnet, dass** eine auf den Gaseintritt der Turbine (32) des zweiten Abgasturboladers (3) führende Abgaszuleitung mit dem zweite Gaseintritt (225) der Turbine (22) des ersten Abgasturboladers (2) verbunden ist.

3. Aufladevorrichtung nach einem der Ansprüche 1 oder 2, **dadurch gekennzeichnet, dass** eine Abgaszuleitung auf den zweite Gaseintritt (225) der Turbine (22) des ersten Abgasturboladers (2) direkt mit dem Abgasaustritt (12) der Brennkraftmaschine (1) verbunden ist.

4. Aufladevorrichtung nach einem der Ansprüche 1 bis 3, **dadurch gekennzeichnet, dass** in einer Abgaszuleitung auf den zweite Gaseintritt (225) der Turbine (22) des ersten Abgasturboladers (2) eine Drosselvorrichtung (4) zum Regeln der Durchflussmenge angeordnet ist.

5. Aufladevorrichtung nach einem der vorangehenden Ansprüche, **dadurch gekennzeichnet, dass** die Laufschaufeln (222) der Turbine (22) des ersten Abgasturboladers (2) jeweils eine Gaseintrittskante aufweisen, und dass die durch die beiden Gaseintritte (224, 225) gebildeten, voneinander getrennten Strömungskanäle auf voneinander getrennte Abschnitte der Gaseintrittskanten führen.

6. Aufladevorrichtung nach einem der vorangehenden Ansprüche, **dadurch gekennzeichnet, dass** zumindest in einem der beiden durch die beiden Gaseintritte (224, 225) gebildeten, voneinander getrennten Strömungskanäle im Bereich stromauf der Laufschaufeln (222) der Turbine (22) des ersten Abgasturboladers (2) Leitschaufeln (226, 227) angeordnet sind.
